(19) Europäisches Patentamt / European Patent Office / Office européen des brevets

(11) **EP 2 336 024 B1**

(12) **FASCICULE DE BREVET EUROPEEN**

(45) Date de publication et mention
de la délivrance du brevet:
**10.07.2013   Bulletin 2013/28**

(51) Int Cl.:
**B64C 27/00** *(2006.01)*

(21) Numéro de dépôt: **10015435.0**

(22) Date de dépôt: **08.12.2010**

(54) **Structure porteuse d' un rotor, et appareil volant muni d' une telle structure porteuse, et procédé pour éviter un couplage instable entre des modes propres de vibration**

Rotortragende Struktur und mit der besagten Struktur ausgestatteter Drehflügler und Methode zur Verhinderung unstabiler Kopplung zwischen den Eigenmoden des mechanischen Systems

Rotor bearing structure, rotorcraft carrying said bearing structure and method for avoiding instable coupling of the system eigenmodes

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **17.12.2009   FR 0906120**

(43) Date de publication de la demande:
**22.06.2011   Bulletin 2011/25**

(73) Titulaire: **EUROCOPTER**
**13725 Marignane Cédex (FR)**

(72) Inventeur: **Cranga, Paul**
**13004 Marseille (FR)**

(74) Mandataire: **Pouillot, Laurent Pierre Paul**
**GPI & Associés**
**Europarc de Pichaury**
**Bât. B2 - 1er Et.**
**1330 Rue Guillibert de la Lauzière**
**13856 Aix-en-Provence cedex 3 (FR)**

(56) Documents cités:
EP-A2- 0 250 135    DE-A1-102007 025 934
FR-A1- 2 769 396    FR-A1- 2 770 825
US-A- 4 420 134

**Description**

La présente invention est du domaine des équipements pour appareil volant motorisé comportant une structure porteuse liée à une tête de rotor, tels que pour un avion à hélice ou un giravion par exemple. Plus particulièrement, la présente invention relève des mécanismes amortisseurs de vibrations induites par des instabilités aéroélastiques résultant d'un couplage entre les modes de vibrations de la structure porteuse et les modes de vibration du rotor. L'invention a alors pour objet une structure porteuse munie d'un tel mécanisme et un appareil volant pourvu d'une structure porteuse.

Parmi les aéronefs, on distingue les appareils volants munis d'un rotor lié à une structure porteuse, par exemple un avion muni d'une hélice ou encore un giravion muni d'un rotor de sustentation voire de propulsion.

Le rotor comporte classiquement un mât rotor solidaire d'un moyeu, ce moyeu portant une pluralité de pales radialement réparties.

Par ailleurs, la structure porteuse possède une cellule, dénommée parfois « fuselage » dans laquelle sont agencés des moyens moteurs aptes à entraîner en rotation le rotor. De plus, la structure porteuse comporte une structure de montage du rotor, permettant de fixer le rotor à la cellule.

Une telle structure de montage comporte usuellement des moyens de transmission mécanique ainsi que des éléments de fixation de ces moyens de transmission à la cellule. Par exemple, une structure de montage d'un giravion, appelée « pylône » par l'homme du métier en langue française et « pylon » en langue anglaise, comprend une boîte de transmission principale de puissance et des

éléments de fixations de cette boîte de transmission principale de puissance à la cellule, telles que des barres de suspension par exemple.

Les moyens de motorisation de la structure porteuse entraînent alors le rotor via les moyens de transmission de la structure de montage.

La structure porteuse et le rotor sont chacune soumises à des excitations forcées inhérentes à la vitesse d'avancement de l'aéronef.

L'excitation dynamique du rotor, par exemple le rotor de sustentation et de propulsion d'un hélicoptère, résulte des charges aérodynamiques auxquelles ce rotor est soumis, ces charges aérodynamiques se décomposant en axes fixes en un effort coplanaire s'exerçant dans le plan général du moyeu du rotor qui est perpendiculaire à l'axe de rotation du rotor, en un effort axial qui s'exerce suivant l'axe de rotation du rotor, et en un moment coplanaire s'exerçant dans un plan perpendiculaire à l'axe de rotation du rotor tangentiellement au mouvement de rotation du moyeu du rotor. Les fréquences de telles vibrations en axes fixes c'est-à-dire liés à la cellule de la structure porteuse, sont égales au produit $kb\Omega$ où « $\Omega$ » désigne la vitesse de rotation du rotor, « b » le nombre de pales et « k » un nombre entier positif. Les fréquences fondamentales correspondent à un nombre « k » égal à l'unité. Ces excitations sont transmises du rotor à la structure par le pylône.

De même, la structure porteuse est soumise à des excitations forcées. Par exemple, la poutre de queue d'une cellule d'hélicoptère peut être excitée directement par un flux d'air turbulent provenant du rotor principal de sustentation et de propulsion.

Les appareils volants munis d'un rotor sont globalement structurés pour pallier aux conséquences de telles vibrations.

A cet effet, il est courant d'équiper le rotor ou la structure de systèmes antivibratoires, dénommés parfois résonateur, pour filtrer les efforts dynamiques aux fréquences les plus gênantes, d'un point de vue confort des passagers ou encore pour éviter la casse d'un élément soumis à cette fatigue vibratoire. Ces systèmes antivibratoires sont alors réglés sur un des harmoniques de la vitesse de rotation du rotor.

Dans ces conditions, il a été proposé tel que selon le document FR2808256 (EUROCOPTER FRANCE) par exemple, des résonateurs pendulaires selon lesquels des éléments pesants sont montées en pendule sur le moyeu de la tête du rotor. De tels résonateurs pendulaires permettent de s'opposer aux vibrations forcées induites par la tête de rotor en mouvement, en agissant suivant l'axe et dans le plan du rotor. La raideur nécessaire de ces résonateurs pendulaires pour filtrer les vibrations est apportée par le champ de force centrifuge dû à la rotation du rotor. Cette rotation anime autour d'articulations les éléments pesants pendulaires d'un mouvement harmonique dont la fréquence est multiple de la vitesse de rotation $\Omega$ du rotor. La structure de ces résonateurs pendulaires permet leur intégration aisée sur la tête de rotor.

Cependant, de tels résonateurs pendulaires sont efficaces pour uniquement une fréquence donnée. De tels résonateurs pendulaires sont agencés pour équiper une tête de rotor implantée en sommet de la structure porteuse, le rotor procurant la sustentation voire la propulsion, et ne prennent pas en compte les caractéristiques propres de la structure porteuse relatives notamment à sa masse et à sa fréquence d'excitation.

En effet, les résonateurs ont pour effet d'étouffer les vibrations en créant une antirésonance à la fréquence donnée de réglage. En conséquence, le résonateur génère deux nouvelles résonances (ou modes de vibration) dont les deux fréquences respectives sont situées de part et d'autre de la fréquence d'antirésonance. La plage de fréquence définie par ces deux modes reste relativement étroite. Néanmoins, les deux modes de vibrations créés par les résonateurs ne sont normalement pas gênants dans la mesure où les deux résonances diffèrent de la fréquence donnée à traiter.

On connait aussi des mécanismes amortisseurs de vibrations pour traiter les vibrations qui résultent de l'excitation forcé de la structure porteuse. On peut par exemple se reporter au document FR2784350 (EUROCOPTER FRANCE) qui décrit un résonateur amorti agencé pour être implanté en queue de la structure porteuse pour filtrer des fréquences données.

Outre les excitations forcées, un autre phénomène vibratoire peut être à l'origine de problèmes majeurs.

Dans le domaine aéronautique en particulier, un problème réside dans l'atténuation des phénomènes vibratoires induits par les instabilités aéroélastiques que subit un appareil en vol. Par exemple, de telles instabilités aéroélastiques peuvent résulter du couplage entre les modes de vibration de la structure porteuse et le flux d'air en mouvement autour d'elle, à savoir notamment une structure de type voilure fixe (aile d'avion) ou voilure tournante (pales de rotor de giravion ou d'hélice d'avion). Il s'agit alors d'instabilités connues par l'homme du métier sous le terme général « flottement » ou « flutter » en langue anglaise.

D'autres instabilités aéroélastiques correspondent par exemple aux instabilités dénommées « whirl flutter » en langue anglaise désignant le couplage des modes de vibrations d'un rotor équipé de pales ou d'aubes avec des modes de vibrations de la structure porteuse supportant le rotor.

Ces phénomènes de « flutter » et de « whirl flutter » se caractérisent par des vibrations à cycle limite ou des vibrations divergentes pouvant conduire à des ruptures de pièces mécaniques ou d'éléments structuraux. Il est donc impératif de prendre en compte ces phénomènes dans la conception de l'aéronef de façon à repousser les vitesses critiques (vitesse d'avancement, vitesse de rotation du rotor) au-delà des limites du domaine de vol.

En particulier pour le « whirl-flutter », les constructeurs évitent que les modes de vibrations du rotor soient susceptibles de se coupler aux modes de vibrations de la structure porteuse, assurant ainsi la compatibilité de ces deux ensembles. Pour cela il suffit généralement de s'assurer du placement des fréquences propres et des amortissements respectifs des modes de vibration des différents ensembles.

Il est cependant difficile de modifier à posteriori les caractéristiques modales de la structure porteuse ou du rotor, si de tels phénomènes apparaissent au cours de la mise au point de l'aéronef. De plus, un constructeur peut être amené à modifier un aéronef existant pour répondre à des besoins spécifiques d'un utilisateur, ce qui peut impacter le comportement de l'appareil vis-à-vis de ces instabilités.

Pour résoudre ces phénomènes qui peuvent apparaître comme explicité précédemment, le constructeur ne peut pas utiliser les résonateurs décris précédemment qui permettent de traiter des excitations forcées, et non pas des couplages. Dès lors, le constructeur choisit souvent de modifier sa structure porteuse, en la raidissant par exemple, une telle modification ayant un coût financier mais aussi un impact en termes de masse non négligeable. De plus, il peut être délicat de réaliser les modifications en question sur un appareil existant.

L'état de la technique inclut de plus les documents EP 0250135, DE 102007025934, FR 2769396 et FR 2770825.

Le document EP 0250135 présente une structure porteuse d'un rotor.

Le document DE 102007025934 présente une machine-outil munie d'un dispositif comprenant des ressorts et des amortisseurs pour supprimer des vibrations données.

Le document FR 2769396 vise un dispositif pour réduire le bruit dans une cabine et non pas pour éviter un couplage destructif entre les modes de vibration d'une structure porteuse et du rotor de l'aéronef, ce dispositif comportant au moins un capteur pour mesurer les valeurs d'un paramètre vibratoire et/ou acoustique représentatif d'un effet vibratoire et/ou acoustique d'au moins une source de bruit , au moins un moyen mécanique contrôlable et apte à créer un effort susceptible de réduire ledit effet vibratoire et/ou acoustique, et une unité de commande, pour commander le moyen mécanique, en fonction des valeurs mesurées par le capteur.

Le document FR 2770825 vise à réduire les vibrations présentes dans la cabine d'un aéronef à voilure tournante à l'aide d'un résonateur agencé dans la cabine.

Ces documents ne se rapportent alors pas à la résolution d'un problème de couplage des modes de vibration d'une structure porteuse et des modes de vibration d'un rotor.

La présente invention a alors pour objet de lutter contre le phénomène de couplage instable des modes de vibrations de la structure porteuse et ceux du rotor d'un aéronef, par des moyens simples, peu onéreux, et pouvant être facilement implémentés sur un appareil existant. Le principe est d'apporter de l'amortissement au(x) mode(s) de vibration de la structure porteuse étant en cause dans le couplage instable.

Le but de la présente invention est de proposer un mécanisme amortisseur de vibrations pour appareils volants muni d'au moins une tête de rotor, avion à hélice ou giravion notamment, qui permette d'optimiser l'atténuation des vibrations induites par le mouvement de du rotor en rotation et auxquelles est soumise la cellule de la structure porteuse de l'appareil. Il est plus particulièrement recherché par la présente invention de proposer un tel mécanisme qui satisfasse aux conditions requises d'efficacité, de simplicité de structure, de masse et d'encombrement réduits permettant son implantation aisée, voire optionnelle, sur l'appareil volant, et qui procure un compromis satisfaisant au regard des contraintes et des difficultés qui ont été énoncées.

La démarche de la présente invention a consisté à munir la structure porteuse de l'appareil d'un mécanisme d'absorption des vibrations transmises par la tête de rotor en mouvement, qui prend en compte les caractéristiques du couplage rotor-structure, c'est-à-dire non seulement celles des pales, mais aussi celles de la structure porteuse, notamment les caractéristiques relatives aux fréquences et aux masses de ses modes propres. Pour procurer à ce mécanisme une efficacité optimisée tout en répondant aux critères du compromis recherché, il est choisi une zone d'implantation du mécanisme dans la transmission du mouvement de la tête rotor vers la structure, qui est donc située proche du centre de la tête rotor ou sur des éléments liés rigidement à la tête rotor, sans pour autant encombrer outre mesure l'environnement de cette zone et/ou générer une gêne, ni sans conférer à la structure du mécanisme une complexité susceptible de porter atteinte à son encombrement général et/ou à sa légèreté et/ou à son obtention à moindres coûts. Cette zone d'implantation du mécanisme est plus particulièrement choisie comme étant une structure de montage que comporte couramment l'appareil volant, pour l'assemblage à la cellule de la structure porteuse de moyens de transmission de la puissance interposés dans la chaîne de transmission de puissance qui s'étend entre les moyens moteurs et le rotor entraînés en rotation par ces moyens moteurs. De tels moyens de transmission sont sujets à subir les vibrations en provenance du rotor, et sont organisés pour être assemblés à la cellule. Une telle structure de montage comprend notamment une boîte de transmission principale de puissance produite par les moyens moteurs pour l'entraînement du rotor, qui présente l'avantage d'être située à proximité de la tête du rotor et d'être liée de façon quasiment rigide au mât du rotor. Le mécanisme d'absorption des vibrations est avantageusement regroupé en un organe indépendant muni de moyens de fixation propre sur ladite structure de montage.

Dès lors, l'invention concerne une structure porteuse d'un rotor d'un appareil volant pourvue d'une cellule et d'une structure de montage apte à être en prise sur le rotor, la structure de montage comprenant des moyens de transmission entraînés par des moyens moteurs de la structure porteuse.

Une telle structure porteuse est principalement reconnaissable en ce que ladite structure de montage étant équipée d'un mécanisme d'amortissement des vibrations pour empêcher le couplage des modes de vibration de la structure porteuse et des modes de vibration d'un rotor qui serait fixé à la structure porteuse, le mécanisme associe notamment un résonateur comprenant un élément pesant monté mobile sur la structure de montage, avec des moyens d'amortissement de la mobilité de l'élément pesant qui sont interposés entre ledit élément pesant et ladite structure de montage, l'élément pesant étant un élément pesant battant porté par la structure de montage par l'intermédiaire d'un premier organe déformable de retenue de sa mobilité.

Le résonateur équipé des moyens d'amortissement est donc fixé au plus près du rotor pour optimiser son efficacité sur les vibrations induites par le rotor, et en tenant compte des modes de vibration de la structure porteuse sollicitée par une excitation forcée pour empêcher le couplage entre les modes de vibration de la structure porteuse et les modes de vibration du rotor. Le montage du mécanisme sur la structure de montage est aisé et est susceptible d'être optionnel, le mécanisme pouvant être réglé et/ou installé en fonction de résultats constatés d'instabilité de l'appareil en vol, sans modification structurelle conséquence de ladite structure de montage.

Le mécanisme a alors pour effet d'amortir les vibrations sur une plage de fréquence large, sans création d'antirésonance contrairement à un résonateur classique.

L'amortissement apporté permet de modifier les modes de vibration de la structure porteuse équipée du mécanisme, et empêche donc la création d'un couplage destructeur entre les modes de vibrations du rotor et de la structure porteuse de ce rotor.

Par ailleurs, selon une variante, la structure de montage incluant une boîte de transmission principale de puissance apte à être en prise avec un mât rotor d'un rotor, le mécanisme d'amortissement proposé est de préférence monté sur une telle boîte de transmission principale de puissance, couramment interposée entre les moyens moteurs et le rotor. Cette boîte de transmission principale de puissance est aussi susceptible d'être une boîte de transmission secondaire affectée à l'entraînement en rotation d'une quelconque tête de rotor, telle qu'une tête de rotor de queue.

La boîte de transmission principale de puissance ayant un fond de boîte relié à la cellule de la structure porteuse, le mécanisme d'amortissement peut être agencé sur ce fond de boîte, si les éléments entre le fond de boîte et la tête rotor sont suffisamment rigides et que cet emplacement est suffisamment sensible aux mouvements de la tête du rotor.

Selon une autre variante, la structure de montage incluant une boîte de transmission principale de puissance apte à être en prise avec un mât rotor d'un rotor, la structure de montage ayant au moins une barre de suspension reliant une partie supérieure de la boîte de transmission principale de puissance à la cellule, le mécanisme d'amortissement est monté sur la barre de suspension.

Selon un exemple de réalisation du résonateur que comprend le mécanisme, la mobilité de l'élément pesant est une mobilité unidirectionnelle dans un plan orthogonal et/ou un plan parallèle à l'axe de rotation du rotor. La cellule étant liée à un repère tridimensionnel de référence comportant un axe longitudinal, un axe transversal et un axe vertical, le plan orthogonal est un plan parallèle au plan passant l'axe longitudinal et l'axe transversal de cette cellule.

Par exemple et selon une forme simplifiée mais néanmoins satisfaisante de réalisation, la mobilité de l'élément pesant est autorisée au moins dans un plan orthogonal à l'axe de rotation du rotor et/ou en tangage autour d'un axe de ce plan.

Selon une forme de réalisation, le premier organe déformable est par exemple constitué de l'un quelconque des organes comprenant au moins une lame flexible, au moins un tube de torsion ou au moins un ressort à spires, ou tout autre organe analogue procurant la mobilité de l'élément pesant.

Les moyens d'amortissement sont indifféremment du type électromagnétique, du type hydraulique, ou du type à déformation mécanique ou élastique tel que par exemple constitués d'au moins un deuxième organe élastiquement déformable formé à partir d'un élastomère à angle de perte important. Tous les autres types de moyens aptes à amortir le mouvement de l'élément pesant induit par les vibrations supportées par la structure de montage des moyens de transmission sont susceptibles d'être exploités.

Le premier organe déformable est un moyen pour s'opposer aux vibrations sur une première plage de fréquences étroite induites par une excitation forcée à laquelle est soumis le rotor, avec des moyens d'amortissement qui sont des moyens pour s'opposer aux vibrations à l'origine d'une instabilité sur une deuxième plage de fréquences plus large que ladite première plage.

Ces fonctions remplies par le premier organe déformable et par les moyens d'amortissement ont pour résultat d'empêcher l'apparition d'un couplage destructeur entre la fréquence propre d'un mode propre de vibration d'une structure porteuse et la fréquence propre d'un mode propre de vibration d'un rotor d'aéronef.

Dans ce dernier cas, il s'agit par exemple d'augmenter la vitesse critique de flottement (« flutter » en langue anglaise) de sorte que l'aéronef ne soit pas sollicité par ce phénomène dans l'ensemble de son domaine de vol. Dès lors, les coefficients d'amortissement des modes de vibration doivent être augmentés positivement. Par suite, l'augmentation de la valeur de la vitesse critique conduit à une augmentation de la plage des fréquences, des vibrations, justifiant la nécessité d'une bande de fréquences plus large pour le fonctionnement du résonateur avec moyen d'amortissement.

L'invention concerne encore et non exclusivement une application pour contrer le phénomène dénommé « whirl flutter » en langue anglaise par l'homme du métier.

Selon un autre aspect, ledit élément pesant ayant une masse donnée, ledit mode de vibration de la structure porteuse étant associée à une fréquence propre donnée, la raideur dudit mécanisme est égale à :

$$K_r = \omega_s{}^2 * m_r$$

où $m_r$ représente la masse de l'élément pesant, où $\omega_s$ représente la fréquence propre donnée du mode de vibration de la structure porteuse à traiter, et où $K_r$ représente la raideur dudit mécanisme.

On note que la raideur dudit mécanisme est étonnamment fonction de la fréquence propre donnée du mode de vibration de la structure porteuse à traiter et non pas d'une fréquence propre de ce mécanisme.

Par ailleurs, l'invention a aussi pour objet un appareil volant muni d'un rotor et d'une structure porteuse comportant une cellule et une structure de montage du rotor à la cellule. L'appareil est notamment remarquable en ce que la structure de montage est une structure porteuse selon l'invention telle que décrite précédemment pour empêcher le couplage des modes de vibration de la structure porteuse et des modes de vibration du rotor.

Enfin, l'invention vise un procédé pour empêcher le couplage des modes de vibration d'une structure porteuse d'un appareil volant et des modes de vibration d'un rotor, ladite structure porteuse portant ledit rotor d'un appareil volant pourvue d'une cellule et d'une structure de montage apte à être en prise sur ledit rotor, ladite structure de montage comprenant des moyens de transmission entraînés par des moyens moteurs de la structure porteuse.

Selon ce procédé, on équipe ladite structure de montage d'un mécanisme d'amortissement des vibrations pour empêcher ledit couplage, ledit mécanisme associant un résonateur comprenant un élément pesant monté mobile sur la structure de montage avec des moyens d'amortissement de la mobilité de l'élément pesant qui sont interposés entre ledit élément pesant et ladite structure de montage, l'élément pesant du résonateur étant un élément pesant battant porté par la structure de montage par l'intermédiaire d'un premier organe déformable de retenue de sa mobilité.

Par ailleurs, il est concevable de déterminer la masse $m_r$ finale du mécanisme d'amortissement, le coefficient d'amortissement $c_r$ final dudit mécanisme d'amortissement et la raideur $K_r$ finale du mécanisme d'amortissement à l'aide de la masse $m_s$ donnée de la structure porteuse et de la fréquence propre $\omega_s$ donnée du mode de vibration à traiter de la structure en recherchant les valeurs propres du système suivant pour une pluralité de valeurs du coefficient d'amortissement $c_r$ dudit mécanisme d'amortissement et de la masse $m_r$ de ce mécanisme d'amortissement afin d'obtenir un amortissement maximal des modes de vibration de la structure porteuse couplée au mécanisme d'amortissement :

$$M\begin{pmatrix}\ddot{q}_i\\\ddot{x}\end{pmatrix} + C\begin{pmatrix}\dot{q}_i\\\dot{x}\end{pmatrix} + K\begin{pmatrix}q_i\\x\end{pmatrix} = 0,$$

où

$$M = \begin{bmatrix} m_s & \\ & m_r \end{bmatrix} \quad C = \begin{bmatrix} c_r & -c_r \\ -c_r & c_r \end{bmatrix} \quad K = \begin{bmatrix} m_s\,\omega_s^2 + k_r & -k_r \\ -k_r & k_r \end{bmatrix}$$

avec « $q_i$ » qui représente le mouvement de la structure porteuse déterminé par des méthodes usuelles, « $\dot{q}_i$ » qui représente la dérivée première par rapport au temps du mouvement de la structure porteuse, « $\ddot{q}_i$ » qui représente la dérivée seconde par rapport au temps du mouvement de la structure porteuse, « $x$ » qui représente du mouvement de l'élément pesant déterminée par des méthodes usuelles, « $\dot{x}$ » qui représente la dérivée première par rapport au temps du mouvement de l'élément pesant, « $\ddot{x}$ » qui représente la dérivée seconde par rapport au temps du mouvement de l'élément pesant, la raideur « $K_r$ » dudit mécanisme d'amortissement étant égale au produit de la masse « $m_r$ » dudit mécanisme d'amortissement et de la fréquence propre « $\omega_s$ » donnée du mode de vibration à traiter à la puissance deux,

En sélectionnant le couple coefficient d'amortissement $c_r$ final dudit mécanisme d'amortissement et masse $m_r$ finale de ce mécanisme d'amortissement, on obtient un amortissement maximal des modes de vibration de la structure porteuse couplée au mécanisme d'amortissement. On déduit la raideur finale à partir de la masse finale par l'équation suivante : $K_r = \omega_s^{2}{}^{*}m_r$.

On note que l'on qualifie de « finale », les paramètres que l'on applique pour réaliser ledit mécanisme d'amortissement.

Selon une réalisation, on fait un balayage simultané d'une pluralité de valeurs du coefficient d'amortissement $c_r$ dudit mécanisme et de la masse $m_r$. On obtient alors un graphique tridimensionnel présentant le coefficient d'amortissement $c_r$ dudit mécanisme et la masse $m_r$ de ce mécanisme ainsi que le coefficient d'amortissement du mode de vibration de la structure déterminé à l'aide dudit système. Le couple coefficient d'amortissement $c_r$ final et masse $m_r$ finale dudit mécanisme d'amortissement correspond au couple générant un coefficient d'amortissement du mode de vibration de la structure maximal.

Selon une deuxième réalisation, on peut fixer le coefficient d'amortissement $c_r$ à une valeur donnée, puis on recherche les valeurs propres du système précédent pour une pluralité de valeurs de la masse $m_r$ du mécanisme d'amortissement. Dès lors, on réalise un premier graphique présentant en abscisse le quotient de cette masse $m_r$ dudit mécanisme d'amortissement et de la masse $m_s$ donnée de ladite structure porteuse et en ordonnée le coefficient d'amortissement du mode de vibration de la structure obtenu via lesdites valeurs propres.

La courbe obtenue présente un maximum représentant un optimal en termes d'apport d'amortissement.

Par suite, on détermine la masse $m_r$ finale dudit mécanisme d'amortissement pour laquelle le quotient de cette masse $m_r$ dudit mécanisme d'amortissement et de la masse $m_s$ donnée de ladite structure porteuse engendre un amortissement maximal de la structure porteuse.

On détermine alors la raideur $K_r$ finale dudit mécanisme d'amortissement, cette raideur $K_r$ finale étant égale au produit la masse $m_r$ finale et de la fréquence propre $\omega_s$ donnée du mode de vibration à traiter à la puissance deux.

Enfin, on recherche les valeurs propres du système précédent pour une pluralité de valeurs du coefficient d'amortissement $c_r$ dudit mécanisme d'amortissement et en utilisant la masse $m_r$ finale et la raideur finale précédemment déterminés. Dès lors, on réalise un deuxième graphique présentant en abscisse le coefficient d'amortissement $c_r$ dudit mécanisme d'amortissement et en ordonnée le coefficient d'amortissement du mode de vibration de la structure obtenu via lesdites valeurs propres.

La courbe obtenue présente un maximum représentant un optimal en termes d'apport d'amortissement.

Le coefficient d'amortissement final est alors égal au coefficient d'amortissement du mécanisme d'amortissement engendrant ledit maximum.

Selon une troisième réalisation, on peut fixer la masse $m_r$ et la raideur $K_r$ du mécanisme d'amortissement à des valeurs données, puis on recherche les valeurs propres du système précédent pour une pluralité de valeurs du coefficient d'amortissement $c_r$. Dès lors, on réalise un premier graphique présentant en abscisse le coefficient d'amortissement $c_r$ dudit mécanisme et en ordonnée le coefficient d'amortissement du mode de vibration de la structure obtenu via lesdites valeurs propres.

La courbe obtenue présente un maximum représentant un optimal en termes d'apport d'amortissement.

Le coefficient d'amortissement final est alors égal au coefficient d'amortissement du mécanisme d'amortissement engendrant ledit maximum.

Enfin, on recherche les valeurs propres du système précédent en utilisant la valeur du coefficient d'amortissement $c_r$ finale dudit mécanisme d'amortissement et en utilisant une pluralité de valeurs de la masse $m_r$. Dès lors, on réalise un deuxième graphique présentant en abscisse le quotient de cette masse $m_r$ dudit mécanisme d'amortissement et de la masse $m_s$ donnée de ladite structure porteuse et en ordonnée le coefficient d'amortissement du mode de vibration de la structure obtenu via lesdites valeurs propres.

La courbe obtenue présente un maximum représentant un optimal en termes d'apport d'amortissement.

Par suite, on détermine la masse $m_r$ finale dudit mécanisme d'amortissement pour laquelle le quotient de cette masse $m_r$ dudit mécanisme d'amortissement et de la masse $m_s$ donnée de ladite structure porteuse engendre un amortissement maximal de la structure porteuse.

On détermine alors la raideur $K_r$ finale dudit mécanisme d'amortissement, cette raideur $K_r$ finale étant égale au produit la masse $m_r$ finale et de la fréquence propre $\omega_s$ donnée du mode de vibration à traiter à la puissance deux

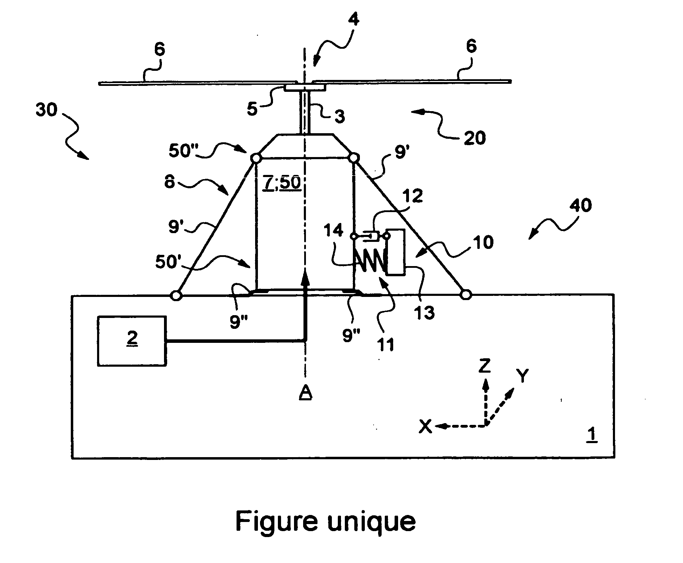

Un exemple de réalisation de la présente invention va être décrit en relation avec la figure unique de la planche annexée, qui représente schématiquement un appareil volant muni d'une structure porteuse intégrant un mécanisme d'absorption de vibrations amortissant selon la présente invention.

Sur la figure, un appareil volant 30 comprend essentiellement une structure porteuse 40 et un rotor 20.

Sur l'exemple de réalisation illustré qui représente un giravion, cette structure porteuse 40 est notamment constituée d'une cellule 1 appelée aussi « fuselage » sur laquelle sont embarqués des équipements de l'appareil volant, l'équipage et le cas échéant du personnel. La cellule comprend des moyens moteurs 2 pour l'entraînement en rotation du rotor 20.

Ce rotor 20 comprend un mât rotor 3 en prise sur une tête de rotor 4. Cette tête de rotor 4 comprend notamment un moyeu 5 qui est porteur de pales 6 et qui est relié au mât rotor 3 pour son entraînement en rotation.

Par ailleurs, la structure porteuse 40 comprend une structure de montage 8 agencée au sommet de la cellule 1 pour porter le rotor 20. Cette structure de montage comporte des moyens de transmission 7 interposés dés lors dans la chaîne de transmission de puissance entre les moyens moteurs 2 et la tête de rotor 4, et plus particulièrement entre les moyens moteurs 2 et le mât rotor 3.

De tels moyens de transmission 7 sont constitués d'une boîte de transmission principale de puissance 50 qui équipe couramment les giravions et qui est en relation avec le mât rotor 3 d'entraînement d'une tête de rotor 4, la boîte de transmission principale de puissance 50 étant disposée au sommet de la cellule 1 de l'appareil volant en station d'assise au sol.

La boîte principale de transmission 50 est donc implantée au sein de la structure de montage 8, dénommée parfois pylône, qui est placé en surplomb de la cellule 1.

De manière habituelle dans le domaine, la structure de montage 8 est équipée de divers éléments de fixation 9', 9" favorisant sa stabilité à l'encontre notamment des efforts et des vibrations en provenance du rotor 20 auxquels il est soumis.

Par exemple, la structure de montage peut comporter des barres de suspension 9' reliant une partie supérieure 50" de la boîte de transmission principale de puissance à la cellule 1. De plus, le fond de boîte 50' est fixé à la cellule 1 par un élément de fixation 9", du type dénommé parfois « barbecue » par l'homme du métier ou encore du type dénommé parfois « sarib » par l'homme du métier.

L'appareil volant 30 intègre un mécanisme 10 d'absorption des vibrations induites notamment par la tête de rotor 4 en mouvement. L'implantation de ce mécanisme 10 est réalisée par l'intermédiaire de la structure de montage 8 des moyens de transmission 7 sur l'appareil, et notamment par l'intermédiaire de la boîte de transmission principale de puissance 50. Plus particulièrement, le mécanisme 10 est agencé sur la paroi latérale du fond de boîte 50' de la boîte de transmission principale de puissance 50. Le mécanisme 10 n'est donc pas disposé entre le fond de boîte 50' et la cellule. De même selon cette variante, le mécanisme 10 n'est pas lié aux barres de suspension mais est uniquement fixé à la boîte de transmission principale de puissance.

Ce mécanisme 10 associe un résonateur 11 et des moyens d'amortissement 12 affectés à ce résonateur 11 pour prendre en compte les caractéristiques de la structure porteuse 40, et notamment sa fréquence d'excitation propre au regard de l'absorption des vibrations induites par la mise en mouvement de la tête de rotor 4 lors du déplacement de l'appareil.

Le résonateur 11 comprend un élément pesant mobile 13, telle qu'un élément pesant battant, qui est fixé sur la structure de montage 8 par l'intermédiaire d'un premier organe déformable 14. Un tel montage de l'élément pesant 13 lui confère une mobilité apte à s'opposer aux vibrations subies par les moyens de transmission 7, et plus particulièrement par ladite structure de montage 8, et induites notamment par la mise en mouvement de la tête de rotor 4.

Le premier organe déformable 14 est un organe apte à filtrer les vibrations induites par la tête de rotor 4 en mouvement, sur une première plage de fréquences étroite. L'élément pesant 13 est par exemple monté mobile sur la structure de montage 8 en flexion, tel que par l'intermédiaire d'une lame ou organe flexible analogue constituant le premier organe déformable 14. La mobilité de l'élément pesant 13 est autorisé dans un plan $\underline{XY}$ orthogonal à l'axe $\underline{A}$ de rotation du rotor 3, voire en tangage autour de l'axe $\underline{Y}$ de ce plan qui est transversal à l'orientation générale d'extension du fuselage.

Les moyens d'amortissement 12 sont interposés entre l'élément pesant 13 et la structure de montage 8, sur lesquelles ils sont en prise. Sur l'exemple de réalisation illustré, les moyens d'amortissement 12 sont des moyens déformables du type hydraulique. Les moyens d'amortissement 12 sont aptes à accompagner le déplacement en mobilité de l'élément pesant 13 en fonction des vibrations transmises à la structure de montage 8 par le rotor 20, selon une deuxième plage de fréquences plus large que la première plage de fréquences relative à l'opposition à ces vibrations que procure le premier organe déformable 14. Un couplage instable entre la structure de montage 8 et le fuselage 1 est alors étonnamment évité, à partir d'un élargissement de la bande de fréquences sur la base de laquelle le mécanisme 10 est apte à filtrer les vibrations en provenance de la tête de rotor 4.

Bien entendu, les moyens d'amortissement peuvent être de type électromagnétique ou encore et non exclusivement de type élastique avec utilisation d'un élastomère à angle de perte importante. De cette façon, le résonateur est fixé au plus près du rotor, sur un des éléments de la structure de montage de manière à limiter la participation des modes supérieurs de vibration de la structure porteuse et à avoir le maximum d'efficacité sur les modes responsables du couplage instable. La limitation du déplacement du centre du rotor est une condition pour éviter le couplage entre le rotor et la structure.

Enfin, il est à noter que selon une variante alternative à la variante schématisée, le mécanisme 10 peut être agencé sur une barre de suspension 9' par exemple.

## Revendications

1. Structure porteuse (40) d'un rotor (20) d'un appareil volant (30) pourvue d'une cellule (1) et d'une structure de montage (8) apte à être en prise sur ledit rotor (20), ladite structure de montage (8) comprenant des moyens de transmission entraînés par des moyens moteurs (2) de la structure porteuse (40),
   caractérisée en ce que ladite structure de montage (8) étant équipée d'un mécanisme (10) anti-couplage d'amortissement des vibrations pour empêcher le couplage des modes de vibration de la structure porteuse (40) et des modes de vibration d'un rotor (20) qui serait fixé à ladite structure porteuse (40), ledit mécanisme (10) associe un résonateur (11) comprenant un élément pesant (13) monté mobile sur la structure de montage (8) avec des moyens d'amortissement (12) de la mobilité de l'élément pesant (13) qui sont interposés entre ledit élément pesant (13) et ladite structure de montage (8), l'élément pesant (13) du résonateur (11) étant un élément pesant battant porté par la structure de montage (8) par l'intermédiaire d'un premier organe déformable (14) de retenue de sa mobilité.

2. Structure porteuse selon la revendication 1,
   caractérisée en ce que, la structure de montage (8) incluant une boîte de transmission principale de puissance (50) apte à être en prise avec un mât rotor (3) d'un rotor (20), le mécanisme d'amortissement (10) est monté sur ladite boîte de transmission principale de puissance (50).

3. Structure porteuse selon la revendication 2,
   caractérisée en ce que, ladite boîte de transmission principale de puissance (50) ayant un fond de boîte (50') relié à ladite cellule (1), le mécanisme d'amortissement (10) est agencé sur ledit fond de boîte (50').

4. Structure porteuse selon la revendication 1,
   caractérisée en ce que, la structure de montage (8) incluant une boîte de transmission principale de puissance (50) apte à être en prise avec un mât rotor (3) d'un rotor (20), ladite structure de montage ayant au moins une barre de suspension (9') reliant une partie supérieure (50") de ladite boîte de transmission principale de puissance (50) à ladite cellule (1), le mécanisme d'amortissement (10) est monté sur ladite barre de suspension (9').

5. Structure porteuse selon l'une quelconque des revendications 1 à 4,
   caractérisée en ce que le premier organe déformable (14) est constitué de l'un quelconque des organes comprenant au moins une lame flexible, au moins un tube de torsion ou au moins un ressort à spires.

6. Structure porteuse selon l'une quelconque des revendications 1 à 5,
   caractérisée en ce que les moyens d'amortissement (12) sont indifféremment du type électromagnétique, du type hydraulique, ou du type à déformation élastique.

7. Structure porteuse selon l'une quelconque des revendications 1 à 6,
   caractérisée en ce que le premier organe déformable (14) est un moyen pour s'opposer à des vibrations sur une première plage de fréquences étroite induites par une excitation forcée à laquelle est soumise le rotor (20), et en ce que les moyens d'amortissement (12) sont des moyens pour s'opposer aux vibrations à l'origine d'une instabilité sur une deuxième plage de fréquences plus large que ladite première plage.

8. Structure porteuse selon l'une quelconque des revendications 1 à 7,
   caractérisé en ce que ledit élément pesant ayant une masse donnée, ledit mode de vibration de la structure porteuse étant associée à une fréquence propre donnée, la raideur dudit mécanisme est égale à :

$$K_r = \omega_s{}^2 * m_r$$

où $m_r$ représente la masse de l'élément pesant, où $\omega_s$ représente la fréquence propre donnée du mode de vibration de la structure porteuse à traiter, et où $K_r$ représente la raideur dudit mécanisme.

9. Appareil volant (30) muni d'un rotor (20) et d'une structure porteuse (40) comportant une cellule (1) et une structure de montage (8) du rotor (20) à ladite cellule (1),
**caractérisé en ce que** ladite structure de montage (8) est selon l'une quelconque des revendications précédentes pour empêcher le couplage des modes de vibration de ladite structure porteuse (40) et des modes de vibration dudit rotor (20).

10. Procédé pour empêcher le couplage des modes de vibration d'une structure porteuse (40) d'un appareil volant et des modes de vibration d'un rotor (20), ladite structure porteuse (40) portant ledit rotor (20) d'un appareil volant (30) pourvue d'une cellule (1) et d'une structure de montage (8) apte à être en prise sur ledit rotor (20), ladite structure de montage (8) comprenant des moyens de transmission entraînés par des moyens moteurs (2) de la structure porteuse (40),
**caractérisée en ce que** l'on équipe ladite structure de montage (8) d'un mécanisme (10) d'amortissement des vibrations pour empêcher ledit couplage, ledit mécanisme (10) associant un résonateur (11) comprenant un élément pesant (13) monté mobile sur la structure de montage (8) avec des moyens d'amortissement (12) de la mobilité de l'élément pesant (13) qui sont interposés entre ledit élément pesant (13) et ladite structure de montage (8), l'élément pesant (13) du résonateur (11) étant un élément pesant battant porté par la structure de montage (8) par l'intermédiaire d'un premier organe déformable (14) de retenue de sa mobilité.

11. Procédé selon revendication 10,
**caractérisée en ce que** l'on détermine la masse ($m_r$) finale dudit mécanisme d'amortissement, le coefficient d'amortissement ($c_r$) final dudit mécanisme d'amortissement et la raideur ($K_r$) finale dudit mécanisme d'amortissement à l'aide de la masse ($m_s$) donnée de ladite structure porteuse et de la fréquence propre ($\omega_s$) donnée du mode de vibration à traiter de la structure :

- en recherchant les valeurs propres du système suivant pour une pluralité de valeurs du coefficient d'amortissement ($c_r$) dudit mécanisme d'amortissement et de la masse ($m_r$) de ce mécanisme d'amortissement :

$$M\begin{pmatrix}\ddot{q}_i \\ \ddot{x}\end{pmatrix} + C\begin{pmatrix}\dot{q}_i \\ \dot{x}\end{pmatrix} + K\begin{pmatrix}q_i \\ x\end{pmatrix} = 0 \,,$$

où

$$M = \begin{bmatrix} m_s & \\ & m_r \end{bmatrix} \quad C = \begin{bmatrix} c_r & -c_r \\ -c_r & c_r \end{bmatrix} \quad K = \begin{bmatrix} m_s\,\omega_s^2 + k_r & -k_r \\ -k_r & k_r \end{bmatrix}$$

avec $q_i$ qui représente le mouvement de la structure porteuse, $\dot{q}_i$ qui représente la dérivée première par rapport au temps du mouvement de la structure porteuse, $\ddot{q}_i$ qui représente la dérivée seconde par rapport au temps du mouvement de la structure porteuse, $x$ qui représente le mouvement de l'élément pesant, $\dot{x}$ qui représente la dérivée première par rapport au temps du mouvement de l'élément pesant, $\ddot{x}$ qui représente la dérivée seconde par rapport au temps du mouvement de l'élément pesant, la raideur ($K_r$) dudit mécanisme étant égale au produit de la masse ($m_r$) dudit mécanisme et de la fréquence propre ($\omega_s$) donnée du mode de vibration à traiter à la puissance deux.
- en sélectionnant le couple coefficient d'amortissement ($c_r$) dudit mécanisme d'amortissement et masse ($m_r$)

de ce mécanisme d'amortissement permettant d'obtenir un amortissement maximal des modes de vibration de la structure porteuse couplée au mécanisme (10) d'amortissement.

**Patentansprüche**

1. Tragende Struktur (40) eines Rotors (20) eines Fluggeräts (30) mit einer Kabine (1) und einer Montagestruktur (8), die in Kontakt mit dem Rotor (20) stehen kann, wobei die Montagestruktur (8) durch Motoren (2) der tragenden Struktur (40) angetriebene Getriebe aufweist, **dadurch gekennzeichnet, dass** die Montagestruktur (8) mit einem Mechanismus (10) zur Kopplungsverhinderung und Vibrationsdämpfung ausgerüstet ist zur Verhinderung der Kopplung von Vibrationsmoden der tragenden Struktur (40) und der Vibrationsmoden eines Rotors (20), der an der tragenden Struktur (40) befestigt ist, wobei der Mechanismus (10) einen Resonator (11), der ein Gewichtselement (13) aufweist, welches beweglich auf der Montagestruktur (8) montiert ist, mit Mitteln (12) zur Dämpfung der Beweglichkeit des Gewichtselements (13) verbindet, die zwischen dem Gewichtselement (13) und der Montagestruktur (8) angeordnet sind, wobei das Gewichtselement (13) des Resonators (11) ein schlagendes Gewichtselement ist, welches von der Montagestruktur (8) über ein erstes verformbares Organ (14) zur Dämpfung seiner Beweglichkeit getragen wird.

2. Tragende Struktur nach Anspruch 1, **dadurch gekennzeichnet, dass** die Montagestruktur (8) ein Haupt-Leistungsgetriebe (50), welches in Eingriff mit einer Rotorwelle (3) eines Rotors (20) stehen kann, aufweist, wobei der Dämpfungsmechanismus (10) auf dem Leistungsgetriebe (50) montiert ist.

3. Tragende Struktur nach Anspruch 2, **dadurch gekennzeichnet, dass** das Haupt-Leistungsgetriebe (50) einen Gehäuseboden (50') aufweist, der mit der Kabine (1) verbunden ist, wobei der Dämpfungsmechanismus (10) auf dem Boden des Gehäuses (50') angeordnet ist.

4. Tragende Struktur nach Anspruch 1, **dadurch gekennzeichnet, dass** die Montagestruktur (8) ein Haupt-Leistungsgetriebe (50) aufweist, welches in Eingriff mit einer Rotorwelle (3) eines Rotors (20) stehen kann, wobei die Montagestruktur mindestens eine Aufhängungsstange (9') aufweist, die einen oberen Teil (50") des Haupt-Leistungsgetriebes (50) mit der Kabine (1) verbindet, wobei der Dämpfungsmechanismus (10) auf der Aufhängungsstange (9') montiert ist.

5. Tragende Struktur nach einem der Ansprüche 1 bis 4, **dadurch gekennzeichnet, dass** das erste verformbare Organ (14) aus irgendeinem der Organe umfassend mindestens ein flexibles Blatt, mindestens ein Torsionsrohr oder mindestens eine Spiralfeder gebildet ist.

6. Tragende Struktur nach einem der Ansprüche 1 bis 5, **dadurch gekennzeichnet, dass** die Dämpfungsmittel (12) unterschiedslos elektromagnetischen Typs, hydraulischen Typs oder des Typs, bei dem eine elastische Verformung stattfindet, sein können.

7. Tragende Struktur nach einem der Ansprüche 1 bis 6, **dadurch gekennzeichnet, dass** das erste verformbare Organ (14) ein Mittel ist, das sich Vibrationen in einem ersten schmalen Frequenzband, induziert durch eine erzwungene Anregung, der der Rotor (20) unterworfen ist, entgegenstellt, und dadurch, dass die Dämpfungsmittel (12) Mittel sind, die sich Vibrationen hervorgerufen durch eine Instabilität in einem zweiten Frequenzband, welches breiter ist als das erste Frequenzband, entgegenstellen.

8. Tragende Struktur nach einem der Ansprüche 1 bis 7, **dadurch gekennzeichnet, dass** das Gewichtselement eine gegebene Masse aufweist, die Vibrationsmode der tragenden Struktur mit einer gegebenen Eigenfrequenz verbunden ist, wobei die Steifheit des Mechanismus gegeben ist durch:

$$K_r = \omega_s^{2} * m_r$$

worin $m$ die Masse des Gewichtselements, $\omega_s$ die gegebene Eigenfrequenz der Vibrationsmode der zu bearbeitenden

tragenden Struktur und $K_r$ die Steifigkeit des Mechanismus bezeichnen.

9. Fluggerät (30) mit einem Rotor (20) und einer tragenden Struktur (40) mit einer Kabine (1) und einer Struktur (8) zur Montage des Rotors (20) an der Kabine (1),
**dadurch gekennzeichnet, dass** die Montagestruktur (8) eine Montagestruktur nach einem der vorstehenden Ansprüche ist zum Verhindern einer Kopplung von Vibrationsmoden der tragenden Struktur (40) und den Vibrationsmoden des Rotors (20).

10. Verfahren zum Verhindern der Kopplung von Vibrationsmoden einer tragenden Struktur (40) eines Fluggerätes und Vibrationsmoden eines Rotors (20), wobei die tragende Struktur (40) einen Rotor (20) eines Fluggerätes (30) trägt, welches mit einer Kabine (1) und einer Montagestruktur (8) versehen ist, die in Kontakt mit dem Rotor (20) stehen kann, wobei die Montagestruktur (8) Getriebemittel aufweist, die von Motormitteln (2) der tragenden Struktur (40) angetrieben werden,
**dadurch gekennzeichnet, dass** man die Montagestruktur (8) mit einem Mechanismus (10) zur Dämpfung von Vibrationen ausrüstet, um die Kopplung zu verhindern, wobei der Mechanismus (10) einen Resonator (11), der ein Gewichtselement (13) aufweist, das beweglich auf der Montagestruktur (8) montiert ist, mit Mitteln (12) zur Dämpfung der Beweglichkeit des Gewichtselements (13) verbindet, die zwischen dem Gewichtselement (13) und der Montagestruktur (8) angeordnet sind, wobei das Gewichtselement (13) des Resonators (11) ein schlagendes Gewichtselement ist, welches von der Montagestruktur (8) über ein erstes verformbares Organ (14) zur Dämpfung seiner Beweglichkeit getragen wird.

11. Verfahren nach Anspruch 10,
**dadurch gekennzeichnet, dass** man die finale Masse ($m_r$) des Dämpfungsmechanismus, den finalen Dämpfungskoeffizienten ($c_r$) des Dämpfungsmechanismus und die finale Steifheit ($K_r$) des Dämpfungsmechanismus mit Hilfe der gegebenen Masse ($m_s$) der tragenden Struktur und der gegebenen Eigenfrequenz ($\omega_s$) der zu behandelnden Vibrationsmode der Struktur bestimmt:

- indem man die Eigenwerte des folgenden Systems für eine Mehrzahl von Werten des Dämpfungskoeffizienten ($c_r$) des Dämpfungsmechanismus und der Masse ($m_r$) dieses Dämpfungsmechanismus sucht:

$$M\begin{pmatrix}\ddot{q}_i\\\ddot{x}\end{pmatrix}+C\begin{pmatrix}\dot{q}_i\\\dot{x}\end{pmatrix}+K\begin{pmatrix}q_i\\x\end{pmatrix}=0,$$

où

$$M=\begin{bmatrix}m_s&\\&m_r\end{bmatrix}\quad C=\begin{bmatrix}c_r&-c_r\\-c_r&c_r\end{bmatrix}\quad K=\begin{bmatrix}m_s\omega_s^2+k_r&-k_r\\-k_r&k_r\end{bmatrix},$$

wobei $q_i$ die Bewegung der tragenden Struktur, $\dot{q}_i$ die erste Ableitung nach der Zeit der Bewegung der tragenden Struktur, $\ddot{q}_i$ die zweite Ableitung nach der Zeit der Bewegung der tragenden Struktur, $x$ die Bewegung des Gewichtselements, $\dot{x}$ die erste Ableitung nach der Zeit der Bewegung des Gewichtselements, $\ddot{x}$ die zweite Ableitung nach der Zeit der Bewegung des Gewichtselements darstellen, wobei die Steifheit ($K_r$) des Mechanismus gleich dem Produkt aus der Masse ($m_r$) des Mechanismus und der gegebenen Eigenfrequenz ($\omega_s$) der zu bearbeitenden Vibrationsmode hoch zwei ist,
- indem man das Wertepaar bestehend aus dem Dämpfungskoeffizienten ($c_r$) des Dämpfungsmechanismus und der Masse ($m_r$) dieses Dämpfungsmechanismus auswählt, das es ermöglicht, eine maximale Dämpfung der an den Dämpfungsmechanismus (10) gekoppelten tragenden Struktur zu erhalten.

**Claims**

1. Carrier structure (40) for a rotor (20) of a flying machine (30), the carrier structure being provided with an airframe (1) and a mounting structure (8) suitable for engaging on said rotor (20), said mounting structure (8) comprising transmission means driven by engine means (2) of the carrier structure (40),
**characterised in that** said mounting structure (8) is fitted with an anti-coupling vibration-damping mechanism (10) for preventing the coupling of the vibration modes of the carrier structure (40) and of the vibration modes of a rotor (20) which would be fastened to said carrier structure (40), and said mechanism (10) associates a resonator (11) comprising a weight element (13) movably mounted on the mounting structure (8) with damping means (12) for damping the movement of the weight element (13) which are interposed between said weight element (13) and said mounting structure (8), the weight element (13) of the resonator (11) being a flapping weight element carried by the mounting structure (8) via a first deformable member (14) for restraining its mobility.

2. Carrier structure according to claim 1,
**characterised in that** the mounting structure (8) includes a main gearbox (50) suitable for engaging with a rotor mast (3) for a rotor (20), and the damping mechanism (10) is mounted on said main gearbox (50).

3. Carrier structure according to claim 2,
**characterised in that** said main gearbox (50) has a casing bottom (50') connected to said airframe (1), and said damping mechanism (10) is arranged on said casing bottom (50').

4. Carrier structure according to claim 1,
**characterised in that** the mounting structure (8) includes a main gearbox (50) suitable for engaging with a rotor mast (3) for a rotor (20), said mounting structure having at least one suspension bar (9') connecting a top portion (50") of said main gearbox (50) to said airframe (1), and said damping mechanism (10) is mounted on said suspension bar (9').

5. Carrier structure according to any one of claims 1 to 4,
**characterised in that** the first deformable member (14) is constituted by any one of the members comprising at least one flexible blade, at least one torsion tube, or at least one coil spring.

6. Carrier structure according to any one of claims 1 to 5,
**characterised in that** the damping means (12) are equally well of the electromagnetic type, the hydraulic type, or the elastic deformation type.

7. Carrier structure according to any one of claims 1 to 6,
**characterised in that** the first deformable member (14) is a means for opposing vibrations in a narrow, first frequency range which are induced by forced excitation to which the rotor (20) is subjected, and **in that** the damping means (12) are means for opposing vibrations giving rise to instability over a second frequency range that is broader than said first range.

8. Carrier structure according to any one of claims 1 to 7,
**characterised in that** said weight element has a given mass, said vibration mode of the carrier structure is associated with a given natural frequency, and the stiffness of said mechanism is equal to:

$$K_r = \omega_s^2 * m_r$$

where $m_r$ represents the mass of the weight element, where $\omega_s$ represents the given natural frequency of the vibration mode of the carrier structure to be treated, and where $K_r$ represents the stiffness of said mechanism.

9. Flying machine (30) provided with a rotor (20) and with a carrier structure (40) comprising an airframe (1) and a mounting structure (8) for mounting the rotor (20) to said airframe (1),
**characterised in that** said mounting structure (8) is according to any one of the preceding claims for preventing the coupling of the vibration modes of said carrier structure (40) and of the vibration modes of said rotor (20).

10. Method for preventing the coupling of the vibration modes of a carrier structure (40) of a flying machine and of the vibration modes of a rotor (20), said carrier structure (40) carrying said rotor (20) of a flying machine (30), the carrier structure being provided with an airframe (1) and a mounting structure (8) suitable for engaging on said rotor (20), said mounting structure (8) comprising transmission means driven by engine means (2) of the carrier structure (40),
**characterised in that** said mounting structure (8) is fitted with a vibration-damping mechanism (10) for preventing said coupling, said mechanism (10) associating a resonator (11) comprising a weight element (13) movably mounted on the mounting structure (8) with damping means (12) for damping the mobility of the weight element (13) which are interposed between said weight element (13) and said mounting structure (8), the weight element (13) of the resonator (11) being a flapping weight element carried by the mounting structure (8) via a first deformable member (14) for restraining its mobility.

11. Method according to claim 10,
**characterised in that** the final mass ($m_r$) of said damping mechanism, the final damping coefficient ($c_r$) of said damping mechanism, and the final stiffness ($K_r$) of said damping mechanism are determined with the help of the given mass ($m_s$) of said carrier structure and the given natural frequency ($\omega_s$) of the vibration mode to be treated of the structure:

- by searching for the eigenvalues of the following system for a plurality of values for the damping coefficient ($c_r$) of said damping mechanism and for the mass ($m_r$) of the damping mechanism:

$$M\begin{pmatrix}\ddot{q}_i \\ \ddot{x}\end{pmatrix} + C\begin{pmatrix}\dot{q}_i \\ \dot{x}\end{pmatrix} + K\begin{pmatrix}q_i \\ x\end{pmatrix} = 0,$$

where

$$M = \begin{bmatrix} m_s & \\ & m_r \end{bmatrix} \quad C = \begin{bmatrix} c_r & -c_r \\ -c_r & c_r \end{bmatrix} \quad K = \begin{bmatrix} m_s\omega_s^2 + k_r & -k_r \\ -k_r & k_r \end{bmatrix}$$

in which $q_i$ represents the movement of the carrier structure, $\dot{q}_i$ represents the first derivative with respect to time of the movement of the carrier structure, $\ddot{q}_i$ represents the second derivative with respect to time of the movement of the carrier structure, $x$ represents the movement of the weight element, $\dot{x}$ represents the first derivative with respect to time of the movement of the weight element, $\ddot{x}$ represents the second derivative with respect to time of the movement of the weight element, and the stiffness ($K_r$) of said mechanism being equal to the product of the mass ($m_r$) of said mechanism and the given natural frequency ($\omega_s$) of the vibration mode to be treated to the power two; and

- by selecting the pair comprising the damping coefficient ($c_r$) of said damping mechanism and the mass ($m_r$) of said damping mechanism that makes it possible to obtain maximum damping of the vibration modes of the carrier structure coupled to the damping mechanism (10).

Figure unique

## RÉFÉRENCES CITÉES DANS LA DESCRIPTION

**Documents brevets cités dans la description**

- FR 2808256
- FR 2784350
- EP 0250135 A
- DE 102007025934
- FR 2769396
- FR 2770825